# EUROPEAN PATENT SPECIFICATION

(11) **EP 4 042 124 B1**
(45) Date of publication and mention of the grant of the patent: **07.05.2025**
(21) Application number: 20781600.0
(22) Date of filing: 07.10.2020
(51) Int. Cl.: G01M 3/22, F28F 7/00, F28F 27/00

(54) **DETECTION OF LEAKS IN HEAT EXCHANGERS**
DETEKTION VON LECKAGEN IN WÄRMETAUSCHERN
DÉTECTION DE FUITES DANS DES ÉCHANGEURS THERMIQUES

(30) Priority: 07.10.2019 GB 201914481
(43) Date of publication of application: 17.08.2022
(73) Proprietor: Accutest International Ltd, West Huntspill Highbridge TA9 3RN (GB)
(72) Inventor: WERNER, Thomas, Somerset TA6 7PY (GB)
(74) Representative: Manaton, Ross Timothy
(86) International application number: PCT/EP2020/078163
(87) International publication number: WO 2021/069519

(56) References cited:
- CN-U- 205 826 237
- GB-A- 2 314 421

## Description

### Technical Field

This invention relates to the detection of leaks in heat exchangers of the type having two discrete fluid flow paths. These include, for example, those of both the plate and tubular varieties.

### Background Art

Heat exchangers are used in a number of different industries, to transfer thermal energy from one fluid to another. To ensure adequate heat transfer, the fluids need to be brought into close contact, separated from each other by a thermal conductor. For optimal heat transfer, the separating conductors are typically relatively thin and of relatively high surface area and inadvertent leakage of fluids between the respective flow paths is a recurrent problem. It is therefore necessary to have means available to detect such leaks when they occur, to enable remedial action to be taken.

Various leakage detection methods have been used and proposed in the past. For example, British patent 2,314,421 discloses a method of leak detection involving the use of helium as a contaminant fluid (i.e. the fluid used to detect the presence of a leak). After emptying the heat exchanger, helium is introduced into one of the fluid flow paths (normally referred to as the contaminant side or flow path) and a helium detector probe is connected to the other fluid flow path (normally referred to as the detection side or flow path), in order to detect any helium leaking from one flow path to the other. It is stated that the helium should preferably be introduced at a pressure not exceeding 20 psig (2.4 x 10 ⁵ N.m ⁻²) and, in a described embodiment, a low-volume air circulation system is used in the detection fluid flow path, driving air via a fan at a rate of 15 to 30 cubic feet per minute (0.007 to 0.014 m ³.s ⁻¹).

European patent 1,236,028 relates to a modification of this method, in which the closed circuit of the air circulation system in the detection fluid flow path of GB 2,314,421 is replaced by an arrangement in which the detection flow path is open to the atmosphere at both ends. As in GB 2,314,421, an air compressor is used in the detection flow path, driving air via a fan at a rate of 15 to 30 cubic feet per minute (0.007 to 0.014 m ³.s ⁻¹). Using this arrangement, a faster and more accurate result is claimed to be achieved.

The system of EP 1,236,028 requires that the pressure in the contaminant flow path be higher than that in the detection fluid flow path. In a particular embodiment, the pressure at which the helium is introduced is said (as in GB 2,314,421) not to exceed 20 psig (2.4 x 10 ⁵ N.m ⁻²). Reference is made in the introduction of EP 1,236,028 to a United States patent dating from 1969 (US 3,425,264), which also specifies a pressure differential. However, that patent, which employs a suction device to introduce a flow of scavenging gas under negative pressure upstream of a suspected leak, relates particularly to heat exchangers of the type employing pipelines situated within a tank (such as those used in nuclear reactor installations). The method involves filling the tank with helium tracer gas, which is not applicable to heat exchangers of the type to which the present invention relates (i.e. those having two discrete fluid flow paths). It is also extremely wasteful of helium, which is an increasingly scarce resource.

One of the problems associated with leak detection in heat exchangers of the type of relevance to the present invention is that residual water (or other liquids) may remain after draining, as well as pockets of air. These can disrupt the flow of contaminant gas through any leaks between the fluid low paths and therefore give rise to false negative results. These issues are addressed in European patent 1,608,942, by a method which modifies that described in EP 1,236,028 by alternating the direction of flow in the contamination fluid flow path, in order to purge the system. EP 1,608,942 also suggests that the contaminant fluid need not necessarily be pure helium but could comprise a mixture comprising 96-98% helium, with the balance being air. This alternation of the direction of passage of the helium introduces a somewhat cumbersome and time-consuming complication. Furthermore, the requirement (as in other prior art methods) for high concentrations of helium is disadvantageous in a world in which supply of this natural resource is dwindling.

There is therefore a continuing need for a simple method of leak detection in heat exchangers, which addresses the problems associated with residual water and air pockets and which preferably avoids the use of high volumes of helium. We have now found that such a result may be achieved by a method of the general type disclosed in GB 2,314,421 but adapted so that a reduced pressure is applied to the detection fluid flow path.

### Summary of Invention

The present invention provides, in one aspect, a method for the detection of leaks in a heat exchanger having discrete first and second fluid flow paths, the method comprising the steps of introducing a contaminant fluid into said first flow path and testing for the presence of said contaminant fluid in said second flow path, wherein the pressure in said second flow path is maintained below atmospheric pressure.

It has been found that the methods of the invention provide increased speed, sensitivity and reliability of results and perform particularly well in situations in which residual water is present in the fluid flow paths. Moreover, it has been found that the methods of the invention can readily be used with much lower concentrations of helium (or other detection fluid) than has hitherto been thought possible.

The degree to which the pressure in the second (detection) flow path is reduced, compared to atmospheric pressure, may vary and it will be readily apparent to the person skilled in the art what will be an appropriate level of partial vacuum in any particular set of circumstances. In preferred embodiments, the degree of reduction below atmospheric pressure may, for example, be between 0.1 bar (1 x 10 ⁴ N.m ⁻²) and 1 bar (1 x 10 ⁵ N.m ⁻²). The pressure in the first (contamination) flow path may either be atmospheric pressure or it may, in some preferred embodiments, be raised above atmospheric pressure - for example by up to 3 bar (3 x 10 ⁵ N.m ⁻²). A dynamic flow is maintained in one or both of the flow paths, to facilitate the passage of contaminant fluid throughout the first (contamination) flow path and, via any leaks, into the second (detection) flow path and thence to the detector.

The contaminant fluid is, in many preferred embodiments, a gas. Helium may, for example, be used, as in the prior art methods discussed above. However, it is also possible to use an alternative contaminant gas, such as hydrogen. In general, any sufficiently mobile gas (i.e. one having a sufficiently low atomic/molecular diameter) may be used. As noted above, the methods of the invention are suitable for use with concentrations of contaminant gas that are substantially lower than the 96% to 98% helium disclosed in EP 1,608,942. Concentrations as low as 5% have been found to be suitable. Indeed, we have found that the use of a low concentration of contaminant gas is advantageous, not simply from the point of view of minimising wastage but also in terms of providing a more accurate result. We have found, in this respect, that use of high concentrations of contaminant gas can tend to flood the heat exchanger and can give rise to false indications of a leak. In some preferred embodiments of method according to the invention, therefore, the contaminant gas (e.g. either helium or hydrogen) is used at a concentration in the range 5% to 10% by volume, with the balance (90% to 95%) being composed of a suitable carrier gas. In principle, any gas which mixes sufficiently well with the contaminant gas may be used as the carrier, it being preferred to use a relatively inert gas. One suitable gas, which also has the advantage of being abundant, is nitrogen. Mixtures of 5% to 10% by volume helium with 90% to 95% by volume nitrogen are readily available commercially and are significantly less expensive that pure helium or highly concentrated helium. The ability to use such low concentration mixtures therefore brings with it a further advantage in terms of cost.

The invention also provides, in an alternative aspect, apparatus for detecting leaks in a heat exchanger having discrete first and second fluid flow paths, the apparatus comprising: a supply of contaminant fluid; means to connect said supply in fluid communication with said first flow path; a detector for indicating the presence of said contaminant fluid; and means to connect said detector in fluid communication with said second flow path; wherein the apparatus further comprises a vacuum pump and means to connect said pump in fluid communication with said second flow path, whereby, in use, a pressure below atmospheric pressure may be applied to said second flow path. In some preferred embodiments, the apparatus further comprises means to apply a pressure above atmospheric pressure to said contaminant fluid in said first flow path.

### Brief Description of Drawings

The invention is hereinafter described in more detail by way of example only, with reference to the attached drawing, in which:

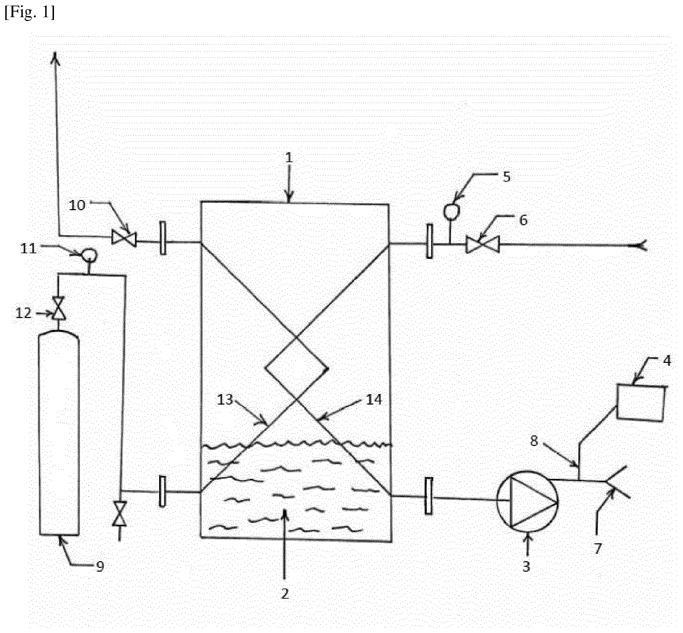

[Fig.1] is a schematic representation of an embodiment of apparatus according to the invention, for carrying out a method according to the invention.

### Description of Embodiments

In Fig. 1, a heat exchanger 1 is depicted diagrammatically, as is the possible presence of retained fluid 2 (typically water or another aqueous fluid). The figure does not depict the detailed structural features of the heat exchanger itself, which are not crucial to the operation of the invention. The invention is suitable for use with any heat exchanger of the type possessing two discrete fluid flow paths. Suitable heat exchangers are, for example, of the plate type or tubular type, for instance as discussed and illustrated in EP 1,608,942.

The first (contaminant) flow path, indicated schematically at 13, is connected to a source of contaminant gas, illustrated in this embodiment as reservoir 9. This may, as discussed above, comprise helium of hydrogen as a minor constituent in a suitable carrier gas such as nitrogen. The contaminant gas passes through regulator valve 12 and its pressure may be monitored via pressure gauge 11. After passing through heat exchanger 1, the detector gas exits the apparatus through exhaust valve 10, for disposal or re-use.

The second (detection) flow path, indicated schematically at 14, is arranged to be in intimate thermal contact with first flow path 13 in a conventional heat exchanger arrangement (such as in a plate stack or tubular configuration). It is supplied via inlet valve 6 with a suitable gas such as air, which is drawn through the flow path by means of a reduced pressure induced by vacuum pump 3. A simple Venturi effect pump is suitable for this purpose but alternative pump types may be used if desired. The pressure in the second flow path 14 may be monitored by vacuum pressure gauge 5, to enable maintenance of the reduced pressure at a suitable level (for example, within the range 0.1 bar (1 x 10⁴ N.m ⁻²) to 1 bar (1 x 10⁵ N.m ⁻²) below atmospheric pressure).

Gas exiting second (detection) flow path 14 is sampled at sampling point 8 by detector 4, which is of conventional type, adapted to detect the presence of the specific detector gas supplied from reservoir 9 (for example, helium or hydrogen). The gas then exits via exhaust 7, for disposal (for example by release to the atmosphere). Although the illustrated embodiment comprises a vacuum pump 3 and an exhaust pump 7, with the sampling point 8 and detector 4 positioned between the two, the structure and arrangement may readily be varied according to need. The volume and pressure of the gas exiting the second flow path is not critical to the operation of the invention, it simply being required that there be a flow towards the exhaust outlet, to draw any contaminant gas to the detector.

If the presence of contaminant gas is registered by detector 4, the presence of leakage between first and second flow paths 13 and 14 may be inferred, allowing the necessary remedial action to be taken. The lack of detection of contaminant gas will, similarly, indicate to a high degree of accuracy that the separation between first and second flow paths 13 and 14 is intact and that no significant leakage is occurring. As noted above, it has been found that the method and apparatus of the invention are capable of indicating the presence or absence of leakage with a significantly greater degree of reliability than the prior art methods.

While the invention has been described by reference to a particular embodiment, it will be apparent to those skilled in the art that various modifications can be made, within the scope of the appended claims.

## Claims

1. A method for the detection of leaks in a heat exchanger (1) having discrete first (13) and second (14) fluid flow paths, the method comprising the steps of introducing a contaminant fluid into said first flow path (13) and testing for the presence of said contaminant fluid in said second flow path (14), **characterized in that** a dynamic flow of contaminant fluid is maintained in said first flow path (13) and the pressure in said second flow path (14) is maintained below atmospheric pressure.

2. A method according to claim 1, wherein the pressure in said second flow path (14) is maintained at between 0.1 bar (1 x 10⁴ N.m⁻²) and 1 bar (1 x 10⁵ N.m⁻²) below atmospheric pressure.

3. A method according to claim 1 or claim 2, wherein the pressure in said first flow path (13) is maintained above atmospheric pressure.

4. A method according to claim 3, wherein the pressure in said first flow path (13) is maintained at up to 3 bar (3 x 10⁵ N.m⁻²) above atmospheric pressure.

5. A method according to any preceding claim, wherein a dynamic flow is maintained in said second flow path (14) .

6. A method according to any preceding claim, wherein the contaminant fluid comprises helium or hydrogen.

7. A method according to claim 6, wherein said helium or hydrogen is present in a concentration of 5 to 10% by volume in a carrier gas.

8. A method according to claim 7, wherein the carrier gas comprises nitrogen.

9. Apparatus for detecting leaks in a heat exchanger having discrete first (13) and second (14) fluid flow paths, the apparatus comprising: a supply of contaminant fluid (9); means (12) to connect said supply in fluid communication with said first flow path (13) ; a detector (4) for indicating the presence of said contaminant fluid; and means (8) to connect said detector (4) in fluid communication with said second flow path (14); wherein the apparatus further comprises a vacuum pump (3) and means to connect said pump in fluid communication with said second flow path (14), **characterized in that** the apparatus is adapted to maintain a dynamic flow of contaminant fluid in said first flow path (13) and to apply a pressure below atmospheric pressure to said second flow path (14).

10. Apparatus according to claim 9, further comprising means to apply a pressure above atmospheric pressure to said contaminant fluid in said first flow path.

## Patentansprüche

1. Verfahren zum Nachweis von Lecks in einem Wärmetauscher (1) mit diskreten ersten (13) und zweiten (14) Fluidströmungswegen, wobei das Verfahren die Schritte des Einführens eines verunreinigenden Fluids in den ersten Strömungsweg (13) und des Testens auf das Vorhandensein des verunreinigenden Fluids in dem zweiten Strömungsweg (14) umfasst, **dadurch gekennzeichnet, dass** ein dynamischer Fluss des verunreinigenden Fluids in dem ersten Strömungsweg (13) aufrechterhalten wird und der Druck in dem zweiten Strömungsweg (14) unter Atmosphärendruck gehalten wird.

2. Verfahren nach Anspruch 1, wobei der Druck in dem zweiten Strömungsweg (14) zwischen 0,1 bar (1 x 10⁴ N.m⁻²) und 1 bar (1 x 10⁵ N.m⁻²) unter dem Atmosphärendruck gehalten wird.

3. Verfahren nach Anspruch 1 oder 2, wobei der Druck in dem ersten Strömungsweg (13) über dem Atmosphärendruck gehalten wird.

4. Verfahren nach Anspruch 3, wobei der Druck in dem ersten Strömungsweg (13) auf bis zu 3 bar (3 x 10⁵ N.m⁻²) über dem Atmosphärendruck gehalten wird.

5. Verfahren gemäß einem der vorhergehenden Ansprüche, wobei in dem zweiten Strömungsweg (14) eine dynamische Strömung aufrechterhalten wird.

6. Verfahren nach einem der vorstehenden Ansprüche, wobei die verunreinigende Flüssigkeit Helium oder Wasserstoff umfasst.

7. Verfahren nach Anspruch 6, wobei das Helium oder der Wasserstoff in einer Konzentration von 5 bis 10 Vol.-% in einem Trägergas vorliegt.

8. Verfahren nach Anspruch 7, wobei das Trägergas Stickstoff enthält.

9. Vorrichtung zum Erkennen von Lecks in einem Wärmetauscher mit diskreten ersten (13) und zweiten (14) Fluidströmungswegen, wobei die Vorrichtung Folgendes umfasst: einen Vorrat an verunreinigendem Fluid (9); Mittel (12), um den Vorrat in Fluidverbindung mit dem ersten Strömungsweg (13) zu bringen; einen Detektor (4) zum Anzeigen des Vorhandenseins des verunreinigenden Fluids; und Mittel (8), um den Detektor (4) in Fluidverbindung mit dem zweiten Strömungsweg (14) zu bringen; wobei die Vorrichtung ferner eine Vakuumpumpe (3) und Mittel umfasst, um die Pumpe in Fluidverbindung mit dem zweiten Strömungsweg (14) zu bringen, **dadurch gekennzeichnet, dass** die Vorrichtung so ausgelegt ist, dass sie einen dynamischen Strom von verunreinigendem Fluid in dem ersten Strömungsweg (13) aufrechterhält und einen Druck unterhalb des Atmosphärendrucks auf den zweiten Strömungsweg (14) ausübt.

10. Vorrichtung nach Anspruch 9, die ferner Mittel umfasst, um einen Druck über dem Atmosphärendruck auf das verunreinigende Fluid in dem ersten Strömungsweg auszuüben.

## Revendications

1. Méthode de détection de fuites dans un échangeur de chaleur (1) ayant un premier (13) et un second (14) trajets d'écoulement de fluide distincts, la méthode comprenant les étapes d'introduction d'un fluide contaminant dans ledit premier trajet d'écoulement (13) et de test de la présence dudit fluide contaminant dans ledit second trajet d'écoulement (14), **caractérisée par le fait qu'**un écoulement dynamique de fluide contaminant est maintenu dans ledit premier trajet d'écoulement (13) et que la pression dans ledit second trajet d'écoulement (14) est maintenue en dessous de la pression atmosphérique.

2. Méthode selon la revendication 1, dans laquelle la pression dans ledit second trajet d'écoulement (14) est maintenue entre 0,1 bar (1 x 10⁴ N.m⁻²) et 1 bar (1 x 10⁵ N.m⁻²) en dessous de la pression atmosphérique.

3. Méthode selon la revendication 1 ou 2, dans laquelle la pression dans ledit premier trajet d'écoulement (13) est maintenue au-dessus de la pression atmosphérique.

4. Méthode selon la revendication 3, dans laquelle la pression dans ledit premier trajet d'écoulement (13) est maintenue jusqu'à 3 bars (3 x 10⁵ N.m⁻²) au-dessus de la pression atmosphérique.

5. Méthode selon l'une quelconque des revendications précédentes, dans laquelle un flux dynamique est maintenu dans ledit second trajet d'écoulement (14).

6. Méthode selon l'une des revendications précédentes, dans laquelle le fluide contaminant comprend de l'hélium ou de l'hydrogène.

7. Méthode selon la revendication 6, dans laquelle l'hélium ou l'hydrogène est présent à une concentration de 5 à 10 % en volume dans un gaz porteur.

8. Méthode selon la revendication 7, dans laquelle le gaz porteur comprend de l'azote.

9. Appareil pour détecter les fuites dans un échangeur de chaleur ayant un premier (13) et un second (14) trajets d'écoulement de fluide distincts, l'appareil comprenant : une alimentation en fluide contaminant (9) ; des moyens (12) pour connecter ladite alimentation en communication fluidique avec ledit premier trajet d'écoulement (13) ; un détecteur (4) pour indiquer la présence dudit fluide contaminant ; et des moyens (8) pour connecter ledit détecteur (4) en communication fluidique avec ledit second trajet d'écoulement (14) ; dans lequel l'appareil comprend en outre une pompe à vide (3) et des moyens pour connecter ladite pompe en communication fluidique avec ledit second trajet d'écoulement (14), **caractérisé en ce que** l'appareil est adapté pour maintenir un flux dynamique de fluide contaminant dans ledit premier trajet d'écoulement (13) et pour appliquer une pression inférieure à la pression atmosphérique à ledit second trajet d'écoulement (14).

10. Appareil selon la revendication 9, comprenant en outre des moyens d'appliquer une pression supérieure à la pression atmosphérique au fluide contaminant dans ledit premier trajet d'écoulement.
